(19) **Europäisches Patentamt / European Patent Office / Office européen des brevets**

(11) **EP 2 660 755 B1**

(12) # EUROPEAN PATENT SPECIFICATION

(45) Date of publication and mention
of the grant of the patent:
**03.06.2015 Bulletin 2015/23**

(51) Int Cl.:
***G06K 19/07*** *(2006.01)*

(21) Application number: **13161946.2**

(22) Date of filing: **02.04.2013**

(54) **System for coding, decoding and wireless transmission of sensor data**

System zur Kodierung, Dekodierung und drähtlosen Übertragung von Sensordaten

Système de codage, décodage et transmission sans fil de données d'un capteur

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.05.2012 IT RM20120190**

(43) Date of publication of application:
**06.11.2013 Bulletin 2013/45**

(73) Proprietor: **Universita Degli Studi Di Perugia
06100 Perugia (IT)**

(72) Inventors:
• **Alimenti, Federico
  06125 Perugia (IT)**
• **Roselli, Luca
  06125 Perugia (IT)**

(74) Representative: **Romano, Giuseppe et al
Società Italiana Brevetti S.p.A
Piazza di Pietra, 39
00186 Roma (IT)**

(56) References cited:
**WO-A1-2008/030636**

EP 2 660 755 B1

## Description

The present invention refers to a system for wireless transmission and reception whose task is to transmit data over a short distance.

### State of the Art

Short-range wireless transmission of sensor data finds application in several fields which go from the monitoring of biological parameters in medicine, to the measuring of quantities of mechanical nature, in industrial applications.

In the last years a number of technologies suitable for this purpose have been developed, even though the emerging one is based on the concept of radio-frequency identification (RFID) systems. This is due to the concurrence of some innovative approaches, such as radio-frequency "energy-harvesting", RF carrier reuse, the method of modulation by changing the antenna-related load, organic electronics and that based on ink-jet printing.

RF energy harvesting and carrier reuse, for instance, allowed the development of battery-less RFID sensors (i.e., completely passive) that can work for years without any maintenance.

A classification of currently available technologies enables to subdivide passive systems into two families: those based on a silicon chip (chip-based) and those without a silicon chip (chip-less). The first family exploits a low-power consumption CMOS chip to implement the main functionalities of the tag (RF carrier rectification, DC voltage adjustment, ASK demodulation, ID decoding, load modulation, etc.). The use of few additional blocks (signal conditioning, ADC, etc.) allows to adapt silicon chip-based tags (transponders) to sensory applications. In this case, the advantage lies in the digital modulation of the transmitted signal and, therefore, in data treatment robustness.

Production costs of these tags are mainly associated to the heterogeneous integration of the silicon chip with the RF antenna, which is typically made by a flexible substrate.

To reduce the above-mentioned costs, tags of silicon chip-less type have been introduced and, in the last years, applied to wireless transmission of sensor data. Typically, tags of this type exploit an antenna whose electrical properties can be controlled by the change of the physical parameter to be measured. In this connection, there are mainly two approaches: the first one consists in inducing a permanent change of the properties of the antenna when a certain critical threshold is exceeded (acceleration, temperature, level of a fluid, etc.). The second one is based on the use of an antenna loaded with an impedance whose value depends on the variable to be measured. In both cases, the wireless measuring system must have absolute accuracy; this sensibly limits the system performances relative to manufacturing tolerances and measurement distance.

A further methodology provides the wireless transmission of sensor-measured data to be associated to the generation of an intermodulation signal by the tag that, for the purpose, is illuminated by two waves of different frequency. The advantage of this idea is that tag response occurs at a precise frequency and, therefore, the tag presence or absence can hardly be equivocated. Alike techniques have been used by harmonic radars to remove echo from the background, and in some 1-bit tags based on frequency duplication.

Almost all tags belonging to the chip-less family transmit set information (equivalent, e.g., to a bar code). As to the very few examples of chip-less tags equipped with sensors, however, the information is associated to the variation of one of the physical parameters of the tag antenna. The typical situation consists in an antenna connected with a resonant circuit whose natural frequency depends on the parameter to be measured. It follows that the accuracy of the measurement has to be of absolute type, therefore rather poor. According to the present invention, instead, two signals are used, one of which acts as reference for the other one. Accuracy, therefore, is of relative type, which allows for much more precise measurements. Document WO2008/030636-A1 discloses a device for coding and wireless transmission of sensor data according to the preamble of claim 1.

Object of the present invention is to solve the several problems left still open by the known art, and this is attained through a method for coding, decoding and wireless transmission and reception of sensor data as defined in claim 16, based on a system comprising a device for coding and transmission as defined in claim 1, a device for reception and decoding as defined in claim 9.

Further features of the present invention are defined in the corresponding dependent claims thereof.

### Advantages of the Invention

The present invention, by overcoming the mentioned problems of the known art, entails several evident advantages.

In particular, the present invention represents a novel approach for solving the problem of the absolute accuracy of many passive wireless sensors of chip-less type. To this end, sensor information is coded as phase difference (or as amplitude difference) between two signals, one acting as reference for the other one.

The invention is configured as an apparatus capable of allowing information transmission in a wireless manner, according to the RFID methodology, i.e., a methodology capable of activating and allowing data transfer only when data are required (tag or transponder).

Advantageously, the present invention can find use, e.g., in the measurement of physical parameters (structural deformations, pressures, temperatures, etc.) in rotary mechanical systems. Let us consider, e.g., the deformation of vanes of a turbine. Said deformation might be transduced into a capacitive variation by means of a MEMS capacitive sensor and determine the phase shift of the tag. The information so coded can be read without contact by a reader mounted on the stator, and correlated to the instantaneous angle of the turbine. Obviously, the tag is completely passive and therefore needs no maintenance (battery replacement). The coaxial configuration of the antennas of the reader and of the tag meets the hypotheses necessary to the operation of the system.

A further area of application is that of the intelligent packaging of goods and products. In this case, the tag might be installed on the package, and the reader arranged at a certain height above the conveyor belt that serves to move or sort the products. The sensor available on the tag is capable of measuring a physical parameter of the product, like, e.g., the temperature of frozen foods (cold chain control). In this case as well, the hypothesis of parallelism between tag antenna and reader antenna is automatically met thanks to the conveyor belt. The reading, moreover, might occur under control of a camera so as to guarantee alignment between the two antenna systems (i.e., that of the reader and that of the tag). A random angle of the intelligent packages on the conveyor belt, instead, is automatically solved thanks to the system potential. To reduce costs, the tag might be manufactured by exploiting an organic electronics, the latter printed on paper or cardboard by ink-jet process.

Finally, by imposing preset and fixed phase shifts (i.e., not subject to any sensory variation) the invention might operate as a normal passive RFID system. For instance, by imposing phase shifts each one different from the other one by 22.5°, 16 different codes can be made available. By complying with the hypotheses of parallelism and alignment between antennas of the reader and of the tag, these codes can be read independently of the rotation angle. One of the possible applications of tags with fixed codes at a vey low cost consists in the driving of robots inside buildings. In that case, tags operate as small radio-beacons, enabling the robot to single out exactly the geometric coordinates of a set of reference points.

The system according to the invention is comprised of a reader and a tag. The reader has the task of illuminating the tag with a radio-frequency signal and of reading the transmitted data thereof. The tag is a circuit equipped with a system of orthogonal antennas, with a harmonic frequency multiplier and with a passive sensor. The system can be applied to the measurement of physical parameters of various nature (temperature, humidity, mechanical stress, illumination intensity, etc.), depending on the type of passive sensor applied to the system.

To the advantage of using completely battery-free tags (a feature by now common to many commercial RFID tags), the present invention combines that of transmitting sensor data. For this purpose, the invented tag utilizes the phase difference or the amplitude difference between two signals, one of which acts as reference for the other one (therefore exploiting a relative accuracy and not an absolute one). These signals are irradiated by the tag thanks to two antennas orthogonal to each other.

The last developments of organic semiconductors and the low circuital complexity of the invented tag (the only electronic device required is a diode) will allow, in the near future, industrial production of the tag by ink-jet conductive printing technologies on flexible substrates at a very low cost, paper not being ruled out among said substrates.

Moreover, one of the greatest technological challenges is represented by production cost. The peculiarities of the system according to the invention can be summed up as follows.

- Completely passive tag. The tag is battery-free and therefore needs no maintenance. It can operate with safety also in environments saturated with explosive gases or substances.
- Use of harmonic frequencies. This allows the reader to distinguish the tag signal without being subject to interferences due to the signal reflected by the background.
- Minimizing of the electronic components required by the tag (chip-less electronics). The sole electronic device required is a diode, or any one nonlinear element suitable for harmonic generation. Since recent studies demonstrate the feasibility of said device by organic semiconductors and ink-jet methodologies, the invented tag could be easily manufactured by utilizing flexible substrates (possibly paper) and ink-jet printers rather than silicon.
- Use of two orthogonal antennas. Such an antenna system enables the reader to obtain information also on tag orientation (rotation).

All this is particularly relevant to the ends of the production cost.

## Brief description of the drawings

The present invention, by overcoming the problems of the known art, entails other several evident advantages that, together with the features and the operation modes, will be made evident in the following detailed description of preferred embodiments thereof, given by way of example and not for limitative purposes. Reference will be made to the figures of the annexed drawings, wherein:

- Figure 1 is a block diagram of a data transmission device (also referred to as tag or transponder) according to the present invention;
- Figure 2 is a block diagram of a data reception device (also referred to as reader) according to the present invention;
- Figure 3 is a block diagram of a vector receiver (based on an homodyne in-phase and quadrature architecture) being part of the reader of Figure 2;
- Figure 4 represents the coordinate system adopted in the tag plane ($\xi$ -- $\eta$ plane) and components of the electric field at frequency $2f_0$;
- Figure 5 represents the coordinate system adopted in the reader plane ($x$ -- $y$ plane); this can be rotated of an angle $\theta$ with respect to the coordinate system of the tag;
- Figures 6a and 6b are graphs representing real part $U_R$ and imaginary part $U_I$ of the complex function $U$ with the varying of the rotation angle $\theta$.

## Detailed description of the drawings

The present invention will hereinafter be described in detail on the basis of the above-indicated figures.

According to a method for transmission and reception of data in accordance with the present invention, first of all a measurement signal of a physical quantity needs to be generated. This, as will be seen, can be carried out through a sensor.

Therefore, a carrier $S_0$ should be generated at a working frequency $f_0$, and said carrier should be wirelessly transmitted to a device of tag or transponder type, which, as will be described hereinafter, can receive it.

On the basis of the carrier received, a corresponding harmonic signal has to be generated, at a frequency multiple of the carrier frequency $f_0$.

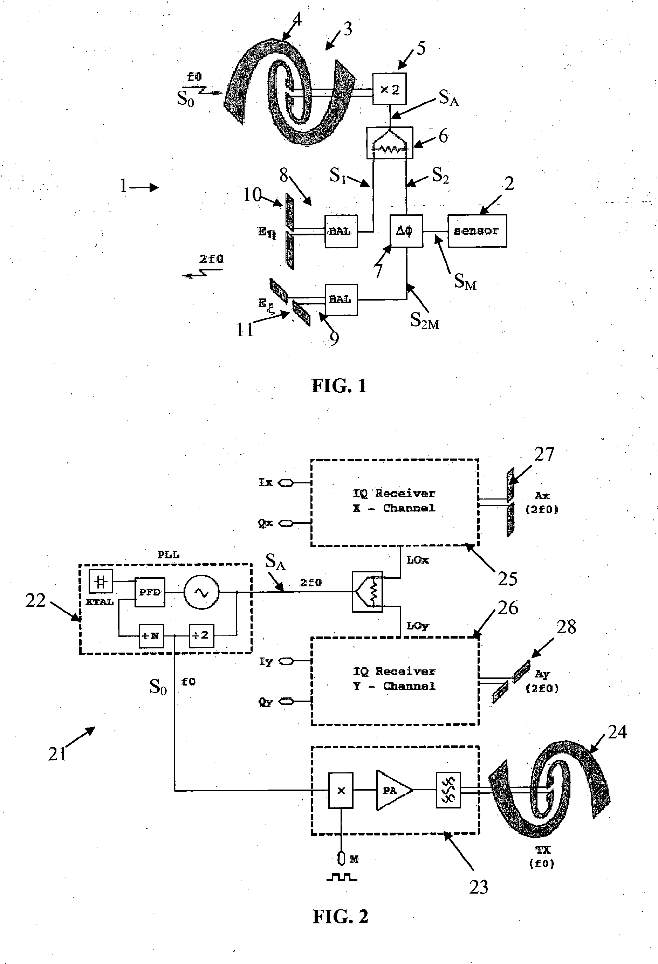

Preferably, the harmonic signal is generated at a frequency double with respect to the carrier signal, as indicated in Figure 2 by way of example and not for limitative purposes.

The harmonic signal is then split into two harmonic components. The first harmonic component is not altered by the sensor, whereas the second harmonic component is modulated on the basis of the measurement signal.

Preferably, the modulating comprises a varying of the phase of the second harmonic component with respect to the first harmonic component, depending on the measurement signal.

Alternatively or in association, the modulating can also provide a varying of the amplitude of the second harmonic component with respect to the first harmonic component, depending on the measurement signal.

Therefore, both the first harmonic component and the modulated second harmonic component are wirelessly transmitted according to orthogonal polarizations.

At this point, the method provides that the reader should separately receive the first harmonic component and the modulated second harmonic component and, subsequently, process them to extract the measurement signal.

Such a method can be carried out by means of an apparatus for transmission and reception comprising a device for coding and wireless transmission of data (the tag or transponder) and a corresponding device for decoding and wireless reception of data (the reader) according to the present invention.

Figure 1 shows a block diagram of a device 1 for coding and wireless transmission of sensory data according to the present invention, comprising input means for inputting a measurement signal $S_M$ of a physical quantity.

Such input means may advantageously comprise input apparatuses apt to receive a signal from a sensor 2, particularly from a passive-type sensor generating such measurement signal $S_M$.

The device 1 is actually a transponder, and therefore comprises a receiver stage 3 apt to receive a carrier signal $S_0$ at a carrier frequency $f_0$.

Preferably, the receiver stage 3 comprises a receiving antenna 4 apt to receive the carrier signal $S_0$. In particular, it is advantageous to use a receiving antenna of helix or spiral type. Thus, the power at the antenna output is maximum regardless of the polarization or the relative orientation between the tag or transponder device 1 and the reading device 21. As will be made evident hereinafter, the reading device or reader, part of the present invention, is also in charge of generating and transmitting the carrier which serves to illuminate the tag 1.

The device 1 further comprises a stage 5 of processing the carrier signal, to generate a corresponding harmonic signal at a frequency multiple of the carrier frequency $f_0$.

Said stage of processing may, e.g., comprise a frequency doubler, to generate a harmonic signal at a frequency $2f_0$, double with respect to said carrier signal. The frequency multiplier may use any one non-linear electronic device, e.g. a junction, varactor, or Schottky-type diode.

Moreover, the device 1 comprises a stage 6 of splitting, e.g. a power divider, used to split the harmonic signal into a first harmonic component $S_1$ and a second harmonic component $S_2$.

The second harmonic component $S_2$ is input in a stage 7 for modulating, which operates on the basis of the measurement signal $S_M$.

For instance, the stage 7 for modulating may comprise means for varying the phase of the second harmonic component with respect to the first harmonic component, depending on the measurement signal, of an angle $\Delta\varphi$ proportional to the measurement signal $S_M$. For this purpose suitable circuits can be used, based, e.g., on variable capacitors of micro-electro-mechanical (MEMS) type.

Alternatively or in association, the stage 7 for modulating may comprise means per varying the amplitude of the second harmonic component with respect to the first harmonic component, depending on the measurement signal $S_M$.

Therefore, the device 1 comprises a first stage 8 of wireless transmission for the transmission of the first harmonic component $S_1$ and a second stage 9 of wireless transmission for the transmission of the modulated second harmonic component $S_{2M}$. The two transmission stages 8, 9 operate according to orthogonal polarizations, e.g. by means of dipole antennas 10, 11 arranged orthogonally to each other.

For instance, referring to Figure 1, the first harmonic component is re-irradiated in vertical polarization, whereas the second harmonic component, phase-shifted of an angle $\Delta\varphi$, is re-irradiated in horizontal polarization.

Next Figure 2 is instead a block diagram of a device 21 for wireless reception and decoding of sensory data transmitted by an aforedescribed device 1 for coding and transmission.

The system according to the present invention, as mentioned several times, is of transponder-reader type. Therefore, the transponder 1 activates itself and transmits data only when the reader 21 requests it.

In particular, the request by the reader 21 materializes in illuminating the transponder 1 with a carrier signal $S_0$ at a carrier frequency $f_0$, as already mentioned above.

Therefore, the reception device 21, i.e. the reader, comprises first of all an oscillator stage 22 for generating a carrier $S_0$ at a frequency $f_0$. Then, through a stage 23 of wireless transmission, the carrier $S_0$ is transmitted to illuminate a transmission device 1 (tag) as aforedescribed.

This causes the activation of the tag or transponder 1 and therefore the irradiation of the first harmonic component $S_1$ and of the modulated second harmonic component $S_{2M}$.

The transmitter 23 can operate both in continuous wave and by exploiting a modulated carrier. For this purpose, an input M for a modulating signal can be provided. By way of example, the transmitter 23 is shown as comprised of a modulator and a power amplifier PA. The latter is followed by a low-pass filter at a frequency $f_0$ (or by a band-rejection filter at the harmonic frequency at which the tag or transponder operates). The presence of the filter is preferable to reduce harmonics generated by the amplifier PA, so as to eliminate the risk of blinding the receivers 25 and 26 contained in the reader 21. Transmitter harmonics, in fact, must be preferably maintained below the noise carpet of the receivers 25 and 26.

The transmission stage 23 therefore comprises a transmitting antenna 24 apt to transmit said carrier S0. This antenna, preferably, is of helix or spiral type, so as to maximize the illumination power independently of the relative orientation between the reader and the transponder.

The device 21 further comprises a first reception stage 25 apt to receive the first harmonic component $S_1$ and a second reception stage 26 apt to receive the modulated second harmonic component $S_{2M}$. This is attained by the adoption of respective linear polarization antennas 27, 28, arranged orthogonally to each other. By way of a non-limiting example, these antennas may be of dipole or planar patch type.

Advantageously, the oscillator stage 22, e.g. of Phased Locked Loop (PLL) type, further generates, in a synchronous manner, a harmonic signal at a frequency multiple of the carrier frequency $f_0$, in particular at a frequency $2f_0$ in the exemplary and non-limiting case of Figure 2. Such signal is used as local oscillator of the reception stages.

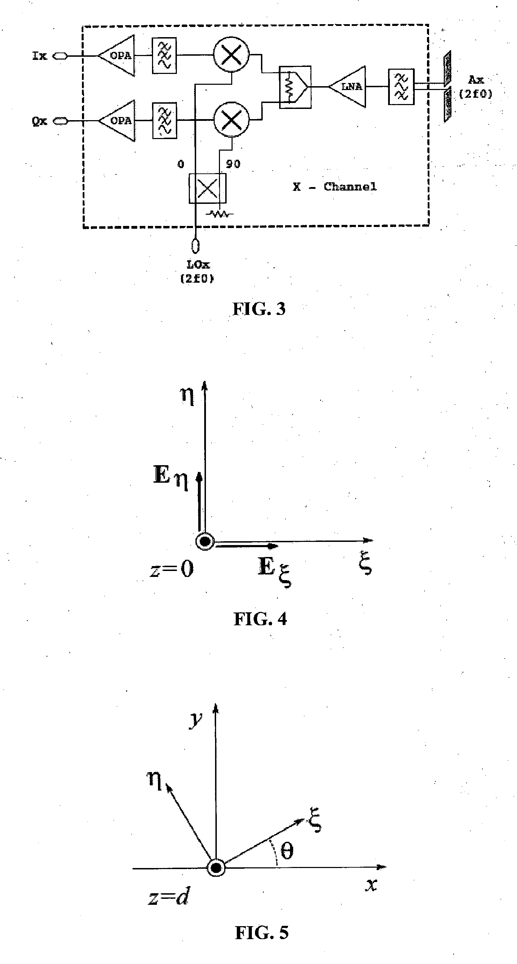

Each of the two receivers, therefore, is sensitive to a particular polarization of the electromagnetic wave. Specifically, according to what indicated in Figure 2, the first reception stage 25 receives the signal in vertical polarization, whereas the second reception stage 26 receives that in horizontal polarization. As sensor information is contained in the phase difference or amplitude difference existing between the two polarizations, to recover it a vector receiver for each channel has to be used. Preferably, such vector receiver is based on an homodyne in-phase and quadrature architecture (IQ), as illustrated in the next Figure 3.

Finally, the device 21 comprises a stage of processing the IQ signals present at the output of the two vector receivers, to extract the measurement signal of the physical quantity.

As to the mathematical modes for extracting the measurement signal from the component of the receiver, reference is made to the theoretical treatment hereinafter. The implementation of such in a software should be deemed within reach of an expert in the field, therefore it will not be described herein.

To sum up, the original and innovative feature of the system proposed consists in combining a coding of the information, i.e. of the measurement signal, as phase difference (or amplitude difference) between two signals, with a system of orthogonally polarized antennas and with a frequency doubler.

The orthogonally polarized antennas allow to have two independent signals, of which one constitutes the reference of the other one (therefore carrying out a relative measurement and not an absolute one) whereas the frequency multiplier enables an easy separation between the query signal and the response signal.

From the description of the invention, it clearly appears how this allows to determine both the sensory state and the rotation angle between tag and reader.

Hereinafter, the operation theory of the proposed wireless sensor will be developed. First of all, the detection of two plane waves of frequency $2f_0$ and with orthogonal polarization is considered. The selection of the second harmonic (frequency $2f_0$) should be construed, in the following theoretical treatment, by way of a non-limiting example. Such waves are generated and irradiated by the tag, whereas the phase and amplitude information associated thereto is recovered by the reader. The illumination of the tag with a carrier at a frequency $f_0$, the generation of the second harmonic and the coding of the information based on phase variation can be traced back to well-known techniques, which will be summed up in the remainder of this paragraph.

The theory will be developed by assuming to have the plane of the tag antenna parallel to that of the reader antenna. Moreover, it will be assumed that the system of the two antennas be axially aligned along the (common) direction of propagation. This hypothesis, though restrictive, is met in several industrial applications such as, for instance, the contactless measurements of mechanical quantities in rotary systems, motors and turbines, or the monitoring of items on conveyor belts. In this latter case it is conceivable that the tag be queried only when in a position orthogonal to the reader.

Tag information coding

The functionality of the proposed wireless sensor depends on the information contained in the phase variation (and, in case, the amplitude variation) applied to the two plane waves at a frequency $2f_0$ and orthogonally polarized. Such waves are completely singled out when the vectors of the electric field associated thereto are known. On the basis of the foregoing hypotheses, said vectors can take the general configuration illustrated in the next figure 4.

In particular: the coordinate system $\xi$-$\eta$ identifies the tag plane. In this plane, the two electric field vectors $\mathbf{E}_\xi$ and $\mathbf{E}_\eta$ are irradiated by two identical antennas, linearly polarized respectively along the two directions $\xi$ and $\eta$.

By adopting complex-vector formalism, it is possible to write:

$$\mathbf{E}_\xi = E_\xi e^{j\varphi_\xi} \mathbf{u}_\xi$$

$$\mathbf{E}_\eta = E_\eta e^{j\varphi_\eta} \mathbf{u}_\eta \qquad \text{(e-1)}$$

Where $E_k$, $\varphi_k$ and $\mathbf{u}_k$, with $k=\xi,\eta$, are respectively the amplitudes and the phases of the electric fields, as well as the unitary vector (or versor). In particular, *amplitudes $E_k$* are assumed real and positive, having concentrated all phase relations between the two fields in the quantity $\varphi_k$.

As a consequence of (e-1) the total electric field $\mathbf{E}_T$, irradiated by the tag at $2f_0$ is given by:

$$\mathbf{E}_T = \mathbf{E}_\xi + \mathbf{E}_\eta$$

$$= E_\xi e^{j\varphi_\xi}\left[\mathbf{u}_\xi + \frac{E_\eta}{E_\xi}e^{j\Delta\varphi}\mathbf{u}_\eta\right] \qquad \text{(e-2)}$$

With $E_\xi \neq 0$ and being $\Delta\varphi$ the phase difference between the two fields:

$$\Delta\varphi = \varphi_\eta - \varphi_\xi \qquad \text{(e-3)}$$

It is important to note that (e-2) is the general expression of an elliptically polarized plane wave. Both the purely linear case ($\Delta\varphi = 0,\pi$) and the purely circular one ($E_\eta/E_\xi = 1$ and $\Delta\varphi = \pm \pi/2$) can be considered as particular cases of the elliptical polarization. This means that the tag-related information can be coded either in terms of phase difference $\Delta\varphi$ or in terms of amplitude ratio $E_\eta/E_\xi$.

Consider now a reader located at a distance *d* from the tag. The reader exploits two alike antennas in linear polarization to detect the tag-generated plane wave (in elliptical polarization). This situation is summed up in Figure 5, where the plane of the reader antenna has been assumed parallel to that of the tag antenna. In this diagram, the two antennas of the reader are located along axes *x* and *y*. Moreover, an angle 9 can form between axes $\xi$ and *x*. In general, this angle will not be known, since it depends on the way in which the tag is connected to the item to be monitored.

As a final hypothesis, consider the case in which the antenna systems of the reader and of the tag be perfectly aligned along (propagation) axis *z*. In this case, the electric field of the reader at point $\mathbf{E}_R$ is simply given by the tag field $\mathbf{E}_T$ multiplied by the channel transfer function:

$$\mathbf{E}_R = \alpha e^{-j\beta d} \mathbf{E}_T \qquad \text{(e-4)}$$

where $\alpha$ is the loss due to the path, $\beta$ is the propagation constant and *d* the distance between reader and tag. By adopting the free-space radiation pattern, $\alpha$ and $\beta$ are:

$$\alpha = \frac{\lambda}{4\pi d}\sqrt{D_R D_T}$$

$$\beta = \frac{2\pi}{\lambda} \qquad \text{(e-5)}$$

In (e-5) the wavelength $\lambda$ is calculated at $2f_0$ whereas $D_R$ and $D_T$ are, respectively, the directivities of the antennas of the reader and of the tag. The electric field in the plane of the reader, $\mathbf{E}_R$, can be projected along the receiver antenna oriented along axis *x* :

$$E_x = \mathbf{E}_R \cdot \mathbf{u}_x$$

$$= E_0 \left[ \mathbf{u}_\xi \cdot \mathbf{u}_x + \frac{E_\eta}{E_\xi} e^{j\Delta\varphi} \mathbf{u}_\eta \cdot \mathbf{u}_x \right] \qquad \text{(e-6)}$$

likewise, for the receiving antenna oriented along axis *y* it is obtained:

$$E_y = \mathbf{E}_R \cdot \mathbf{u}_y$$

$$= E_0 \left[ \mathbf{u}_\xi \cdot \mathbf{u}_y + \frac{E_\eta}{E_\xi} e^{j\Delta\varphi} \mathbf{u}_\eta \cdot \mathbf{u}_y \right] \qquad \text{(e-7)}$$

In (e-6) and (e-7) the phasor $E_0$ is defined as:

$$E_0 = \alpha e^{j\left(\varphi_\xi - \beta d\right)} E_\xi \qquad \text{(e-8)}$$

Considering that the projections of versors $\xi$ and $\eta$ along the directions $x$ and $y$ are given by:

$$\begin{aligned}
\mathbf{u}_\xi \cdot \mathbf{u}_x &= \cos\vartheta \\
\mathbf{u}_\eta \cdot \mathbf{u}_x &= -\sin\vartheta \\
\mathbf{u}_\xi \cdot \mathbf{u}_y &= \sin\vartheta \\
\mathbf{u}_\eta \cdot \mathbf{u}_y &= \cos\vartheta
\end{aligned} \tag{e-9}$$

it is obtained:

$$E_x = E_0\left[\cos\vartheta - \frac{E_\eta}{E_\xi}e^{j\Delta\varphi}\sin\vartheta\right] \tag{e-10}$$

$$E_y = E_0\left[\sin\vartheta + \frac{E_\eta}{E_\xi}e^{j\Delta\varphi}\cos\vartheta\right] \tag{e-11}$$

The fields $E_x$ and $E_y$ can ultimately be correlated to received voltages, processed by the two channels of the reader. For this purpose, the effective length $l_e$ of the antenna can be exploited. Received voltages, referred to the input are:

$$V_k^i = l_e E_k \tag{e-12}$$

where $k = x,y$ and the apex $i$ is for input. If, for instance, a half-wave dipole antenna is considered, the maximum $l_e$ is:

$$l_e = \frac{\lambda}{\pi} \tag{e-13}$$

which is smaller than $\lambda/2$ due to the sinusoidal distribution of current along the dipole itself. By inserting (e-10) and (e-11) in (e-12) and using Euler's formulas to express $e^{j\Delta\varphi}$ it is obtained:

$$V_x^i = l_e E_0\left(A_x + jB_x\right) \tag{e-14}$$

$$V_y^i = l_e E_0\left(A_y + jB_y\right) \tag{e-15}$$

where quantities $A$ and $B$ contain all tag-related information, i.e. $\Delta\varphi$, $E_\eta/E_\xi$ and $\vartheta$:

$$A_x = \cos\vartheta - \frac{E_\eta}{E_\xi}\cos\Delta\varphi\,\sin\vartheta$$

$$A_y = \sin\vartheta + \frac{E_\eta}{E_\xi}\cos\Delta\varphi\,\cos\vartheta \tag{e-16}$$

$$B_x = -\frac{E_\eta}{E_\xi}\sin\Delta\varphi\,\sin\vartheta$$

$$B_y = \frac{E_\eta}{E_\xi}\sin\Delta\varphi\,\cos\vartheta \tag{e-17}$$

Signals in the time domain can be easily obtained from the phasors in (e-14), (e-15), by inserting therein the expression of $E_0$ reported in (e-8). The voltage at the input of channel $x$ is given by:

$$
\begin{aligned}
v_x^i(t) &= \Re\left\{ V_x^i\, e^{j2\omega_0 t} \right\} \\
&= V_0\,\Re\left\{ (A_x + jB_x)e^{j(2\omega_0 t + \varphi_\xi - \beta d)} \right\} \\
&= V_0\big[ A_x\cos(2\omega_0 t + \varphi_\xi - \beta d) \\
&\quad - B_x\sin(2\omega_0 t + \varphi_\xi - \beta d)\big]
\end{aligned}
\tag{e-18}
$$

$V_0$ being the amplitude of the received signal:

$$V_0 = l_e\left|E_0\right| = \alpha l_e E_\xi \tag{e-19}$$

Likewise, the input voltage of channel $y$ can be written as:

$$
\begin{aligned}
v_y^i(t) &= V_0\big[ A_y\cos(2\omega_0 t + \varphi_\xi - \beta d) \\
&\quad - B_y\sin(2\omega_0 t + \varphi_\xi - \beta d)\big]
\end{aligned}
\tag{e-20}
$$

Upon obtaining the expression in the time domain it is easy to derive the conversion products and, therefrom, in-phase $i(t)$ and quadrature $q(t)$ components of the output signal. For channel $x$ it is obtained:

$$i_x(t) = LPF\left\{2G_v^{rx} v_x^i(t)\cos(2\omega_0 t - \psi)\right\}$$

$$= G_v^{rx}V_0\left(A_x\cos\psi_R - B_x\sin\psi_R\right) \qquad \text{(e-21)}$$

$$q_x(t) = LPF\left\{-2G_v^{rx} v_x^i(t)\sin(2\omega_0 t - \psi)\right\}$$

$$= G_v^{rx}V_0\left(A_x\sin\psi_R + B_x\cos\psi_R\right) \qquad \text{(e-22)}$$

where $G_v^{rx}$ is the total (voltage) gain of the receiver, $\psi$ is the phase of the local oscillator $LPF\{\ \}$ is the low-pass operator extracting the components in base band (removing the conversion product at $4\omega_0$). The quantity $\psi_R$ is defined as:

$$\psi_R = \psi + \varphi_\xi - \beta d \qquad \text{(e-23)}$$

Likewise, the outputs of channel $y$ are:

$$i_y(t) = G_v^{rx}V_0\left(A_y\cos\psi_R - B_y\sin\psi_R\right) \qquad \text{(e-24)}$$

$$q_y(t) = G_v^{rx}V_0\left(A_y\sin\psi_R + B_y\cos\psi_R\right) \qquad \text{(e-25)}$$

In the case of a modulated carrier, i.e. of a signal injected at the input M of Figure 2, (e-21)-(e-25) represent the zero-peak amplitude of the base band signal at the receiver output.

As a final remark, it is important to note that the gain of the receiver $G_v^{rx}$ and the phase of the local oscillator $\psi$ have been assumed identical both for channel $x$ and for channel $y$ of the reader. In practice, this condition can be obtained by calibrating the two receivers.

Relations (e-21)-(e-22) and (e-24)-(e-25) constitute a set of four equations that can be written at any instant. Known terms are given by in-phase and quadrature signals at the output of the two channels of the reader, or by measurable data. The unknowns are the received amplitude $V_0$, the received overall phase $\psi_R$ and the tag quantities, particularly: $\vartheta$, $\Delta\varphi$ and $E_\eta/E_\xi$. As a result, 5 unknowns are obtained; this means finding a further relation based on the knowledge of the system. For instance, the tag may be designed to have a given ratio $E_\eta/E_\xi$, therefore coding all of the information in the quantity $\Delta\varphi$.

In order to eliminate $V_0$ and $\psi_R$ from the preceding system of equations, the following ratio may be calculated at each time instant:

$$U = U_R + jU_I = \frac{i_x + jq_x}{i_y + jq_y} \qquad \text{(e-26)}$$

By developing the preceding expressions it is obtained:

$$U_R = \frac{i_x i_y + q_x q_y}{i_y^2 + q_y^2}$$

$$= \frac{A_x A_y + B_x B_y}{A_y^2 + B_y^2} \quad \text{(e-27)}$$

$$U_I = \frac{q_x i_y - i_x q_y}{i_y^2 + q_y^2}$$

$$= \frac{B_x A_y - A_x B_y}{A_y^2 + B_y^2} \quad \text{(e-28)}$$

The values $U_R$ and $U_I$ can be calculated directly from the measured output voltages (known terms), whereas the tag unknowns are contained inside quantities $A$ and $B$. The relation between $U_R$, $V_I$ and these unknowns is found by inserting equations (e-16), (e-17) in (e-27), (e-28). After some steps it is obtained:

$$U_R = \frac{1}{D_u}\left\{\left[1-\left(\frac{E_\eta}{E_\xi}\right)^2\right]\cos\vartheta\sin\vartheta\right.$$

$$\left. +\frac{E_\eta}{E_\xi}\cos\Delta\varphi\left(\cos^2\vartheta - \sin^2\vartheta\right)\right\} \quad \text{(e-29)}$$

$$U_I = -\frac{1}{D_u}\frac{E_\eta}{E_\xi}\sin\Delta\varphi \quad \text{(e-30)}$$

where the denominator $D_u$ is given by:

$$D_u = \sin^2 \vartheta + \left(\frac{E_\eta}{E_\xi}\right)^2 \cos^2 \vartheta$$

$$+ 2\frac{E_\eta}{E_\xi}\cos\vartheta\sin\vartheta\cos\Delta\varphi \qquad \text{(e-31)}$$

Note that, upon suitable calibration of the system (based on IQ outputs detection when the distance between tag and reader belongs to a set of known values), it is possible to obtain also the data $\psi_R$. Since $\psi_R$ is expressed by relation (e-23), the finding described in the present invention can also allow the measurement of distance variations (relative distance) between reader and tag. Such measurement entails periodicities for integer multiples of the wavelength, the latter being calculated at the harmonic frequency used by the system.

<u>Analysis of a particular case</u>

Consider the particular case with $E_\eta/E_\xi = 1$, i.e. the case in which the power transmitted by the two orthogonal antennas at a frequency $2f_0$ be equal. Under this hypothesis, the equations (e-27), (e-28) are reduced to:

$$U_R = \frac{\cos\Delta\varphi\cos(2\theta)}{1+\cos\Delta\varphi\sin(2\theta)} \qquad \text{(e-32)}$$

$$U_I = \frac{-\sin\Delta\varphi}{1+\cos\Delta\varphi\sin(2\theta)} \qquad \text{(e-33)}$$

Function $U_R$ is singular all times its denominator is equal to zero. This occurs for particular values of phase $\Delta\varphi$ (or for the sensor information-coding phase) and of the rotation angle $\theta$. Critical angles can easily be calculated and are reported in Table 1. For $\Delta\varphi = n\pi$ with $n$ an integer, instead, the numerator of function $U_I$ is always equal to zero. However, for $\Delta\varphi$ near to the critical angles of Table 1, also values $U_I$ can be very high.

Table 1: Critical angles

| $\Delta\varphi$ | $\theta$ |
|---|---|
| | |
| $0, 2\pi...$ | $\dfrac{3}{4}\pi, \dfrac{7}{4}\pi...$ |
| $\pi, 3\pi...$ | $\dfrac{1}{4}\pi, \dfrac{5}{4}\pi...$ |

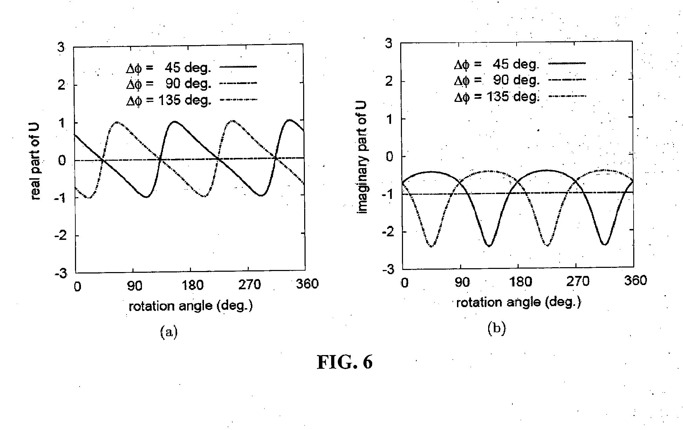

The singularity problem arises for those values of $\Delta\varphi$ which produce waves with a purely linear polarization. This problem can always be solved in the following way: when a high value of $U_R$ is detected, the ratio between $(i_y + jq_y)$ and $(i_x + jq_x)$ is evaluated, in lieu of that in (e-26). Alternatively, the critical value of $\Delta\varphi$ can be avoided by suitably conditioning the modulating signal. This latter approach is illustrated in Figure 6, where $U_R$ and $U_I$ are plotted depending on the rotation angle $\theta$, and for $\Delta\varphi$ in the range of 45 to 135 degrees.

It is interesting to note that $\Delta\varphi$ - 90*deg.* implies a pure circular polarization, and therefore both $U_R$ and $U_I$ are independent of the rotation angle.

The present invention has hereto been described with reference to a preferred embodiment thereof. It is understood that other embodiments might exist, all falling within the concept of the same invention, and all comprised within the protective scope of the claims hereinafter.

## Claims

1. A device (1) for coding and wireless transmission of sensor data, comprising:

   - input means for inputting a measurement signal ($S_M$) of a physical quantity;
   - a receiver stage (3) apt to receive a carrier ($S_0$) at a carrier frequency ($f_0$);
   - a stage (5) of processing said carrier to generate a corresponding harmonic signal ($S_A$) at a frequency multiple of the carrier frequency ($f_0$); **characterized by**:

     - a stage (6) of splitting said harmonic signal ($S_A$) into a first harmonic component ($S_1$) and a second harmonic component ($S_2$);
     - a stage (7) for modulating said second harmonic component ($S_2$) on the basis of said measurement signal ($S_M$);
     - a first stage (8, 10) of wireless transmission of said first harmonic component ($S_1$) and a second stage (9, 11) of wireless transmission of said modulated second harmonic component ($S_{2M}$), according to orthogonal polarizations.

2. The device according to claim 1, wherein said receiver stage (3) comprises a receiving antenna (4) apt to receive said carrier signal ($S_0$).

3. The device according to claim 2, wherein said receiving antenna (4) is of helix or spiral type.

4. The device according to any one of the preceding claims, wherein said stage of processing said carrier signal comprises a frequency doubler (5), to generate a harmonic signal ($S_A$) at a frequency $2f_0$ double with respect to said carrier signal ($S_0$).

5. The device according to claim 4, wherein said frequency doubler (5) uses a non-linear electronic device.

6. The device (1) according to any one of the preceding claims, wherein said stage (7) for modulating said second harmonic component ($S_2$) comprises means for varying the phase of said second harmonic component ($S_2$) with respect to said first harmonic component ($S_1$), depending on said measurement signal ($S_M$), to obtain a modulated harmonic component ($S_{2M}$).

7. The device according to any one of the preceding claims, wherein said stage (7) for modulating said second harmonic component comprises means for varying the amplitude of said second harmonic component ($S_2$) with respect to said first harmonic component ($S_1$), depending on said measurement signal ($S_M$), to obtain a modulated harmonic component ($S_{2M}$).

8. The device according to any one of the preceding claims, wherein said first and second wireless transmission stage comprise respective dipole antennas (10, 11), arranged orthogonally to each other.

9. A device (21) for wireless reception and decoding of sensor data transmitted by a device (1) for coding and transmission according to one of the preceding claims, comprising:

   - an oscillator stage (22) for generating a carrier ($S_0$) at a carrier frequency ($f_0$)
   - a stage (23, 24) of wireless transmission of said carrier signal ($S_0$);
   - a first reception stage (25) apt to receive said first harmonic component ($S_1$) and a second reception stage (26) apt to receive said modulated second harmonic component ($S_{2M}$);
   - a stage of processing said first harmonic component and said modulated second harmonic component received, to extract said measurement signal ($S_M$) of a physical quantity.

10. The device (21) for wireless reception and decoding of sensor data according to claim 9, wherein said oscillator stage (22) further generates a harmonic signal ($S_A$) at a frequency multiple of the carrier frequency ($f_0$), used as local oscillator of said first and second reception stage.

11. The device according to claim 9 or 10, wherein said first and second reception stages are vector receivers.

12. The device according to claim 11, wherein said vector receivers are based on an in-phase and quadrature architecture.

13. The device according to any one of the claims 9 to 12, wherein said wireless transmission stage (23, 24) comprises a transmitting antenna (24) apt to transmit said carrier signal ($S_0$).

14. The device according to claim 13, wherein said transmitting antenna (24) is of helix or spiral type.

15. The device according to any one of the claims 9 to 14, wherein said first and second wireless reception stages (25, 26) comprise respective dipole antennas (27, 28), arranged orthogonally to each other.

16. A method for wireless transmission and reception of sensor data, comprising the steps of:

- generating a measurement signal ($S_M$) of a physical quantity;
- generating a carrier signal ($S_0$) at a carrier frequency ($f_0$);
- wirelessly transmitting said carrier signal ($S_0$);
- receiving said transmitted carrier signal ($S_0$) ; **characterized by**:

  - generating a corresponding harmonic signal ($S_A$) at a frequency multiple of the carrier frequency ($f_0$);
  - splitting said harmonic signal ($S_A$) into a first harmonic component ($S_1$) and a second harmonic component ($S_2$);
  - modulating said second harmonic component ($S_2$) on the basis of said measurement signal ($S_M$), to obtain a modulated harmonic component ($S_{2M}$);
  - transmitting said first harmonic component ($S_1$) and said modulated second harmonic component ($S_{2M}$), according to orthogonal polarizations;
  - receiving said first harmonic component ($S_1$) and said modulated second harmonic component ($S_{2M}$);
  - processing said first harmonic component ($S_1$) and said modulated second harmonic component ($S_{2M}$) received, to extract said measurement signal ($S_M$) of a physical quantity;

17. The method according to claim 16, wherein said harmonic signal ($S_A$) has a frequency $2f_0$ double with respect to said carrier signal ($S_0$).

18. The method according to any one of the claims 16 to 17, wherein said step of modulating said second harmonic component ($S_2$) comprises a phase variation of said second harmonic component ($S_2$) with respect to said first harmonic component ($S_1$), depending on said measurement signal ($S_M$).

19. The method according to any one of the claims 16 to 18, wherein said step of modulating said second harmonic component ($S_2$) comprises an amplitude variation of said second harmonic component ($S_2$) with respect to said first harmonic component ($S_1$), depending on said measurement signal ($S_M$).

20. The method according to any one of the claims 16 to 19, making use of a device according to one of the claims 1 to 8 and of a device according to one of the claims 9 to 15, further comprising a step of processing said first harmonic component ($S_1$) and said modulated second harmonic component ($S_{2M}$) received, to extract distance variations between said transmission device (1) and said reception device (21).

**Patentansprüche**

1. Vorrichtung (1) zur Kodierung und drahtlosen Übertragung von Sensordaten, die umfasst:

- Eingabemittel zur Eingabe eines Messsignals ($S_M$) einer physikalischen Quantität;
- eine Empfangsstufe (3), die geeignet ist ein Trägersignal ($S_0$) bei einer Trägerfrequenz ($f_0$) zu empfangen;
- eine Stufe (5) zur Verarbeitung des Trägersignals, um ein entsprechendes harmonisches Signal ($S_A$) bei einer Frequenz zu erzeugen, die ein Mehrfaches der Trägerfrequenz ($f_0$) ausmacht;

**gekennzeichnet durch**:

- eine Stufe (6) zur Aufteilung des harmonischen Signals ($S_A$) in eine erste harmonische Komponente ($S_1$) und eine zweite harmonische Komponente ($S_2$);
- eine Stufe (7) zur Modulation der zweiten harmonischen Komponente ($S_2$) auf der Basis des Messsignals ($S_M$);
- eine erste Stufe (8, 10) zur drahtlosen Übertragung der ersten harmonischen Komponente ($S_1$) und eine zweite Stufe (9, 11) zur drahtlosen Übertragung der modulierten zweiten harmonischen Komponente ($S_{2M}$), entsprechend orthogonaler Polarisationen.

2. Vorrichtung gemäß Anspruch 1, wobei die Empfangsstufe (3) umfasst: eine Empfangsantenne (4), die geeignet ist das Trägersignal ($S_0$) zu empfangen.

3. Vorrichtung gemäß Anspruch 2, wobei die Empfangsantenne (4) helix- oder spiralförmig ist.

4. Vorrichtung gemäß einem der vorangehenden Ansprüche, wobei die Stufe zur Verarbeitung des Trägersignals umfasst: einen Frequenzverdoppler (5), um ein harmonisches Signal ($S_A$) bei einer Frequenz $2f_0$ zu erzeugen, die doppelt so hoch ist wie die des Trägersignals ($S_0$).

5. Vorrichtung gemäß Anspruch 4, wobei der Frequenzverdoppler (5) eine nichtlineare elektronische Vorrichtung verwendet.

6. Vorrichtung (1) gemäß einem der vorangehenden Ansprüche, wobei die Stufe (7) zur Modulation der zweiten harmonischen Komponente ($S_2$) umfasst: Mittel zur Veränderung der Phase der zweiten harmonischen Komponente ($S_2$) bezüglich der ersten harmonischen Komponente ($S_1$), in Abhängigkeit von dem Messsignal ($S_M$), um eine modulierte harmonische Komponente ($S_{2M}$) zu erhalten.

7. Vorrichtung gemäß einem der vorangehenden Ansprüche, wobei die Stufe (7) zur Modulation der zweiten harmonischen Komponente umfasst: Mittel zur Veränderung der Amplitude der zweiten harmonischen Komponente ($S_2$) bezüglich der ersten harmonischen Komponente ($S_1$), in Abhängigkeit von dem Messsignal ($S_M$), um eine modulierte harmonische Komponente ($S_{2M}$) zu erhalten.

8. Vorrichtung gemäß einem der vorangehenden Ansprüche, wobei die erste und zweite Stufe zur drahtlosen Übertragung umfassen: entsprechende Dipolantennen (10, 11), die orthogonal zueinander angeordnet sind.

9. Vorrichtung (21) zum drahtlosen Empfang und zur Dekodierung von Sensordaten, die durch eine Vorrichtung (1) zur Kodierung und Übertragung gemäß einem der vorangehenden Ansprüche übertragen werden, die umfasst:

- eine Oszillatorstufe (22) zur Erzeugung eines Trägersignals ($S_0$) bei einer Trägerfrequenz ($f_0$);
- eine Stufe (23, 24) zur drahtlosen Übertragung des Trägersignals ($S_0$);
- eine erste Empfangsstufe (25), die geeignet ist die erste harmonische Komponente ($S_1$) zu empfangen, und eine zweite Empfangsstufe (26), die geeignet ist die modulierte zweite harmonische Komponente ($S_{2M}$) zu empfangen;
- eine Stufe zur Verarbeitung der ersten empfangenen harmonischen Komponente und der modulierten zweiten harmonischen Komponente, um das Messsignal ($S_M$) einer physischen Quantität zu extrahieren.

10. Vorrichtung (21) zum drahtlosen Empfang und zur Dekodierung von Sensordaten gemäß Anspruch 9, wobei die Oszillatorstufe (22) weiterhin ein harmonisches Signal ($S_A$) bei einer Frequenz erzeugt, die ein Mehrfaches der Trägerfrequenz ($f_0$) ausmacht, und als ein lokaler Oszillator der ersten und zweiten Empfangsstufe verwendet wird.

11. Vorrichtung gemäß Anspruch 9 oder 10, wobei die erste und zweite Empfangsstufe Vektorempfänger sind.

12. Vorrichtung gemäß Anspruch 11, wobei die Vektorempfänger auf einer phasengleichen und phasenverschobenen Architektur basieren.

13. Vorrichtung gemäß einem der Ansprüche 9 bis 12, wobei die Stufe zur drahtlosen Übertragung (23, 24) umfasst: eine Übertragungsantenne (24), die geeignet ist das Trägersignal ($S_0$) zu übertragen.

**14.** Vorrichtung gemäß Anspruch 13, wobei die Übertragungsantenne (24) helix- oder spiralförmig ist.

**15.** Vorrichtung gemäß einem der Ansprüche 9 bis *14,* wobei die erste und zweite Stufe zum drahtlosen Empfang (25, 26) umfassen: entsprechende Dipolantennen (27, 28), die orthogonal zueinander angeordnet sind.

**16.** Verfahren zur drahtlosen Übertragung und zum drahtlosen Empfang von Sensordaten, das die folgenden Stufen umfasst:

- Erzeugung eines Messsignals ($S_M$) einer physischen Quantität;
- Erzeugung eines Trägersignals ($S_0$) bei einer Trägerfrequenz ($f_0$);
- drahtlose Übertragung des Trägersignals ($S_0$);
- Empfang des übertragenen Trägersignals ($S_0$); **gekennzeichnet durch**:
- Erzeugung eines entsprechenden harmonischen Signals ($S_A$) bei einer Frequenz, die ein Mehrfaches der Trägerfrequenz ($f_0$) ausmacht;
- Aufteilung des harmonischen Signals ($S_A$) in eine erste harmonische Komponente ($S_1$) und eine zweite harmonische Komponente ($S_2$);
- Modulation der zweiten harmonischen Komponente ($S_2$) auf der Basis des Messsignals ($S_M$), um eine modulierte harmonische Komponente ($S_{2M}$) zu erhalten;
- Übertragung der ersten harmonischen Komponente ($S_1$) und der modulierten zweiten harmonischen Komponente ($S_{2M}$), entsprechend orthogonaler Polarisationen;
- Empfang der ersten harmonischen Komponente ($S_1$) und der modulierten zweiten harmonischen Komponente ($S_{2M}$);
- Verarbeitung der empfangenen ersten harmonischen Komponente ($S_1$) und der modulierten zweiten harmonischen Komponente ($S_{2M}$), um das Messsignal ($S_M$) einer physischen Quantität zu extrahieren.

**17.** Verfahren gemäß Anspruch 16, wobei das harmonische Signal ($S_A$) über eine Frequenz $2f_0$ verfügt, die doppelt so hoch wie die des Trägersignals ($S_0$) ist.

**18.** Verfahren gemäß einem der Ansprüche 16 bis 17, wobei die Stufe zur Modulation der zweiten harmonischen Komponente ($S_2$) umfasst: eine Phasenveränderung der zweiten harmonischen Komponente ($S_2$) bezüglich der ersten harmonischen Komponente ($S_1$), in Abhängigkeit des Messsignals ($S_M$).

**19.** Verfahren gemäß einem der Ansprüche 16 bis 18, wobei die Stufe zur Modulation der zweiten harmonischen Komponente ($S_2$) umfasst: eine Amplitudenveränderung der zweiten harmonischen Komponente ($S_2$) bezüglich der ersten harmonischen Komponente ($S_1$), in Abhängigkeit von dem Messsignal ($S_M$).

**20.** Verfahren gemäß einem der Ansprüche 16 bis 19, unter Verwendung einer Vorrichtung gemäß einem der Ansprüche 1 bis 8 und einer Vorrichtung gemäß einem der Ansprüche 9 bis 15, das weiterhin umfasst: eine Stufe zur Verarbeitung der ersten harmonischen Komponente ($S_1$) und der modulierten zweiten harmonischen Komponente ($S_{2M}$), um Veränderungen der Entfernung zwischen der Übertragungsvorrichtung (1) und der Empfangsvorrichtung (21) zu extrahieren.

**Revendications**

**1.** Dispositif (1) pour le codage et l'émission sans fil de données de capteur, comprenant :

- des moyens d'entrée pour entrer un signal de mesure ($S_M$) d'une quantité physique ;
- un étage de récepteur (3) capable de recevoir une porteuse ($S_0$) à une fréquence de porteuse ($f_0$) ;
- un étage (5) de traitement de ladite porteuse pour générer un signal harmonique ($S_A$) correspondant à une fréquence multiple de la fréquence de porteuse ($f_0$) ; **caractérisé par** :

- un étage (6) de division dudit signal harmonique ($S_A$) en une première composante harmonique ($S_1$) et une deuxième composante harmonique ($S_2$) ;
- un étage (7) de modulation de ladite deuxième composante harmonique ($S_2$) sur la base dudit signal de mesure ($S_M$) ;
- un premier étage (8, 10) d'émission sans fil de ladite première composante harmonique ($S_1$) et un deuxième étage (9, 11) d'émission sans fil de ladite deuxième composante harmonique modulée ($S_{2M}$), conformément aux polarisations orthogonales.

2. Dispositif selon la revendication 1, dans lequel ledit étage de récepteur (3) comprend une antenne de réception (4) capable de recevoir ledit signal de porteuse ($S_0$).

3. Dispositif selon la revendication 2, dans lequel ladite antenne de réception (4) est du type en hélice ou en spirale.

4. Dispositif selon l'une quelconque des revendications précédentes, dans lequel ledit étage de traitement dudit signal de porteuse comprend un doubleur de fréquence (5), pour générer un signal harmonique ($S_A$) à une fréquence $2f_0$ double par rapport au dit signal de porteuse ($S_0$).

5. Dispositif selon la revendication 4, dans lequel ledit doubleur de fréquence (5) utilise un dispositif électronique non linéaire.

6. Dispositif (1) selon l'une quelconque des revendications précédentes, dans lequel ledit étage (7) pour moduler ladite deuxième composante harmonique ($S_2$) comprend des moyens pour modifier la phase de ladite deuxième composante harmonique ($S_2$) par rapport à ladite première composante harmonique ($S_1$), en fonction dudit signal de mesure ($S_M$), pour obtenir une composante harmonique modulée ($S_{2M}$).

7. Dispositif selon l'une quelconque des revendications précédentes, dans lequel ledit étage (7) pour moduler ladite deuxième composante harmonique comprend des moyens pour modifier l'amplitude de ladite deuxième composante harmonique ($S_2$) par rapport à ladite première composante harmonique ($S_1$), en fonction dudit signal de mesure ($S_M$), pour obtenir une composante harmonique modulée ($S_{2M}$).

8. Dispositif selon l'une quelconque des revendications précédentes, dans lequel lesdits premier et deuxième étages d'émission sans fil comprennent des antennes dipôles (10, 11) respectives, agencées orthogonalement l'une à l'autre.

9. Dispositif (21) pour la réception sans fil et le décodage de données de capteur émises par un dispositif (1) pour le codage et l'émission selon l'une quelconque des revendications précédentes, comprenant :

   - un étage d'oscillateur (22) pour générer une porteuse ($S_0$) à une fréquence de porteuse ($f_0$) ;
   - un étage (23, 24) d'émission sans fil dudit signal de porteuse ($S_0$),
   - un premier étage de réception (25) capable de recevoir ladite première composante harmonique ($S_1$) et un deuxième étage de réception (26) capable de recevoir ladite deuxième composante harmonique modulée ($S_{2M}$) ;
   - un étage de traitement de ladite première composante harmonique et de ladite deuxième composante harmonique modulée reçues, pour extraire ledit signal de mesure ($S_M$) d'une quantité physique.

10. Dispositif (21) pour la réception sans fil et le décodage de données de capteur selon la revendication 9, dans lequel ledit étage d'oscillateur (22) génère en outre un signal harmonique ($S_A$) à une fréquence multiple de la fréquence de porteuse ($f_0$), utilisé en tant qu'oscillateur local desdits premier et deuxième étages de réception.

11. Dispositif selon la revendication 9 ou 10, dans lequel lesdits premier et deuxième étages de réception sont des récepteurs vectoriels.

12. Dispositif selon la revendication 11, dans lequel lesdits récepteurs vectoriels sont basés sur une architecture en phase et en quadrature.

13. Dispositif selon l'une quelconque des revendications 9 à 12, dans lequel ledit étage d'émission sans fil (23, 24) comprend une antenne d'émission (24) capable d'émettre ledit signal de porteuse ($S_0$).

14. Dispositif selon la revendication 13, dans lequel ladite antenne d'émission (24) est du type en hélice ou en spirale.

15. Dispositif selon l'une quelconque des revendications 9 à 14, dans lequel lesdits premier et deuxième étages de réception sans fil (25, 26) comprennent des antennes dipôles (27, 28) respectives, agencées orthogonalement l'une à l'autre.

16. Procédé pour l'émission et la réception sans fil de données de capteur, comprenant les étapes :

- de génération d'un signal de mesure ($S_M$) d'une quantité physique ;
- de génération d'un signal de porteuse ($S_0$) à une fréquence de porteuse ($f_0$) ;
- d'émission sans fil dudit signal de porteuse ($S_0$) ;
- de réception dudit signal de porteuse ($S_0$) émis ; **caractérisé par** :

- la génération d'un signal harmonique ($S_A$) correspondant à une fréquence multiple de la fréquence de porteuse ($f_0$) ;
- la division dudit signal harmonique ($S_A$) en une première composante harmonique ($S_1$) et une deuxième composante harmonique ($S_2$);
- la modulation de ladite deuxième composante harmonique ($S_2$) sur la base dudit signal de mesure ($S_M$), pour obtenir une composante harmonique modulée ($S_{2M}$) ;
- l'émission de ladite première composante harmonique ($S_1$) et de ladite deuxième composante harmonique modulée ($S_{2M}$), conformément aux polarisations orthogonales ;
- la réception de ladite première composante harmonique ($S_1$) et de ladite deuxième composante harmonique modulée ($S_{2M}$) ;
- le traitement de ladite première composante harmonique ($S_1$) et de ladite deuxième composante harmonique modulée ($S_{2M}$) reçues, pour extraire ledit signal de mesure ($S_M$) d'une quantité physique.

17. Procédé selon la revendication 16, dans lequel ledit signal harmonique ($S_A$) a une fréquence $2f_0$ double par rapport au dit signal de porteuse ($S_0$).

18. Procédé selon l'une quelconque des revendications 16 à 17, dans lequel ladite étape de modulation de ladite deuxième composante harmonique ($S_2$) comprend une variation de phase de ladite deuxième composante harmonique ($S_2$) par rapport à ladite première composante harmonique ($S_1$), en fonction dudit signal de mesure ($S_M$).

19. Procédé selon l'une quelconque des revendications 16 à 18, dans lequel ladite étape de modulation de ladite deuxième composante harmonique ($S_2$) comprend une variation d'amplitude de ladite deuxième composante harmonique ($S_2$) par rapport à ladite première composante harmonique ($S_1$), en fonction dudit signal de mesure ($S_M$).

20. Procédé selon l'une quelconque des revendications 16 à 19, utilisant un dispositif selon l'une des revendications 1 à 8 et un dispositif selon l'une des revendications 9 à 15, comprenant en outre une étape de traitement de ladite première composante harmonique ($S_1$) et de ladite deuxième composante harmonique modulée ($S_{2M}$) reçues, pour extraire les variations de distance entre ledit dispositif d'émission (1) et ledit dispositif de réception (21).

**FIG. 1**

**FIG. 2**

**FIG. 3**

**FIG. 4**

**FIG. 5**

(a)

(b)

**FIG. 6**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008030636 A1